# EUROPEAN PATENT APPLICATION

(11) **EP 4 831 784 A1**
(43) Date of publication of application: **28.10.2026**
(21) Application number: 24908418.7
(22) Date of filing: 12.12.2024
(51) Int. Cl.: G06F 3/04842, G06F 40/258, G06F 3/0482, G06F 40/117

(54) **INTERACTION METHOD AND APPARATUS FOR TABLE DOCUMENT, ELECTRONIC DEVICE, AND STORAGE MEDIUM**

(30) Priority: 18.12.2023 CN 202311747223
(71) Applicant: Lemon Inc., Grand Cayman, KY1-1205 (KY)
(72) Inventor: CHEN, Siyue, Beijing 100028 (CN); HE, Shengfan, Beijing 100028 (CN)
(74) Representative: Isarpatent
(86) International application number: PCT/SG2024/050789
(87) International publication number: WO 2025/136221

(57) **Abstract**

Embodiments of the present disclosure provide an interaction method and apparatus for a table document, an electronic device, and a storage medium. The method comprises: displaying a wide table document in an interaction interface, the wide table document being provided with at least two data columns, and at least one data column among the at least two data columns being unable to be completely displayed in a current view page of the interaction interface; on the basis of document content of the wide table document, displaying at least one data label corresponding to a data column in the interaction interface; and in response to a trigger operation for a target data label, controlling the interaction interface to move to a target view page, the target view page being used for positioning and displaying a target data column corresponding to the target data label. By displaying the data label corresponding to the data column, and moving the target data label to the corresponding target view page in response to the trigger operation for the target data label, the rapid positioning of the target data column is achieved in the interaction scene for the wide table document comprising multiple data columns, and the interaction efficiency for wide tables is improved.

## Description

The present application claims priority to Chinese Patent Application No. 202311747223.X, filed on December 18, 2023, which is incorporated herein by reference in its entirety as a part of the present application.

### TECHNICAL FIELD

Embodiments of the present disclosure relate to an interaction method and an apparatus for a spreadsheet document, an electronic device, and a storage medium.

### BACKGROUND

The spreadsheet document is a common document format, and data is recorded through rows and columns, which may achieve the purpose of information display and processing very intuitively and efficiently. The spreadsheet document usually uses one data row to record one data object, and uses one data column to record object content corresponding to the data object.

In the interaction process of viewing and editing the above spreadsheet document, the user usually needs to manually locate the content to be edited, which has the problem of low interaction efficiency.

### SUMMARY

Embodiments of the present disclosure provide an interaction method and an apparatus for a spreadsheet document, an electronic device, and a storage medium, to overcome the problem of low operation efficiency for the spreadsheet document.

In a first aspect, an embodiment of the present disclosure provides an interaction method for a spreadsheet document, including:
displaying a wide spreadsheet document in an interaction interface, where the wide spreadsheet document has at least two data columns, and at least one data column of the at least two data columns fails to be fully displayed in a current view page of the interaction interface;
displaying at least one data label corresponding to the data column in the interaction interface based on document content of the wide spreadsheet document; and
controlling, in response to a trigger operation for a target data label, the interaction interface to display a positioning view page, where the positioning view page is used to positionally display a data column corresponding to the target data label.

In a second aspect, an embodiment of the present disclosure provides an interaction apparatus for a spreadsheet document, including:
a display module, configured to display a wide spreadsheet document in an interaction interface, where the wide spreadsheet document has at least two data columns, and at least one data column of the at least two data columns fails to be fully displayed in a current view page of the interaction interface;
a processing module, configured to display at least one data label corresponding to the data column in the interaction interface based on document content of the wide spreadsheet document; and
a control module, configured to control, in response to a trigger operation for a target data label, the interaction interface to display a positioning view page, where the positioning view page is used to positionally display a data column corresponding to the target data label.

In a third aspect, an embodiment of the present disclosure provides an electronic device, including: a processor and a memory;
where the memory stores a computer-executable instruction; and
the processor executes the computer-executable instruction stored in the memory, to cause the at least one processor to execute the interaction method for the spreadsheet document according to the first aspect and various possible designs of the first aspect.

In a fourth aspect, an embodiment of the present disclosure provides a computer-readable storage medium, where a computer-executable instruction is stored in the computer-readable storage medium, and when the computer-executable instruction is executed by a processor, the interaction method for the spreadsheet document according to the first aspect and various possible designs of the first aspect is implemented.

In a fifth aspect, an embodiment of the present disclosure provides a computer program product, including a computer program, where when the computer program is executed by a processor, the interaction method for the spreadsheet document according to the first aspect and various possible designs of the first aspect is implemented.

### BRIEF DESCRIPTION OF DRAWINGS

In order to more clearly illustrate the technical solutions in the embodiments of the present disclosure or in the prior art, the drawings required in describing the embodiments or the prior art will be briefly introduced below. Apparently, the drawings in the following description are some embodiments of the present disclosure, and for those skilled in the art, other drawings may also be obtained from these drawings without creative work.
Fig. 1 is an application scenario diagram of an interaction method for a spreadsheet document provided by an embodiment of the present disclosure.
Fig. 2 is a first flowchart of an interaction method for a spreadsheet document provided by an embodiment of the present disclosure.
Fig. 3 is a schematic diagram of a data label provided by an embodiment of the present disclosure.
Fig. 4 is a flowchart of a specific implementation of step S102 in the embodiment shown in Fig. 2.
Fig. 5 is a flowchart of a specific implementation of step S1021 in the embodiment shown in Fig. 4.
Fig. 6 is a schematic diagram of a process of positioning a target data column provided by an embodiment of the present disclosure.
Fig. 7 is a second flowchart of an interaction method for a spreadsheet document provided by an embodiment of the present disclosure.
Fig. 8 is a flowchart of a specific implementation of step S204 in the embodiment shown in Fig. 7.
Fig. 9 is a schematic diagram of highlighting a data label provided by an embodiment of the present disclosure.
Fig. 10 is a flowchart of a specific implementation of step S206 in the embodiment shown in Fig. 7.
Fig. 11 is a structural block diagram of an interaction apparatus for a spreadsheet document provided by an embodiment of the present disclosure.
Fig. 12 is a schematic structural diagram of an electronic device provided by an embodiment of the present disclosure.
Fig. 13 is a schematic hardware structural diagram of an electronic device provided by an embodiment of the present disclosure.

### DETAILED DESCRIPTION

In order to make the objectives, technical solutions and advantages of embodiments of the present disclosure clearer, the technical solutions in the embodiments of the present disclosure will be described clearly and comprehensively with reference to the drawings in the embodiments of the present disclosure. Apparently, the described embodiments are part of the embodiments of the present disclosure, rather than all of them. All other embodiments obtained by those skilled in the art without creative work based on the embodiments in the present disclosure belong to the protection scope of the present disclosure.

It should be noted that the user information (including but not limited to user device information, user personal information, etc.) and data (including but not limited to data for analysis, stored data, displayed data, etc.) involved in the present disclosure are information and data authorized by the user or fully authorized by all parties, and the collection, use and processing of the relevant data shall comply with the relevant laws, regulations and standards of the relevant countries and regions, and provide corresponding operation entrance for the user to choose authorization or rejection.

The application scenarios of the embodiments of the present disclosure will be explained below.

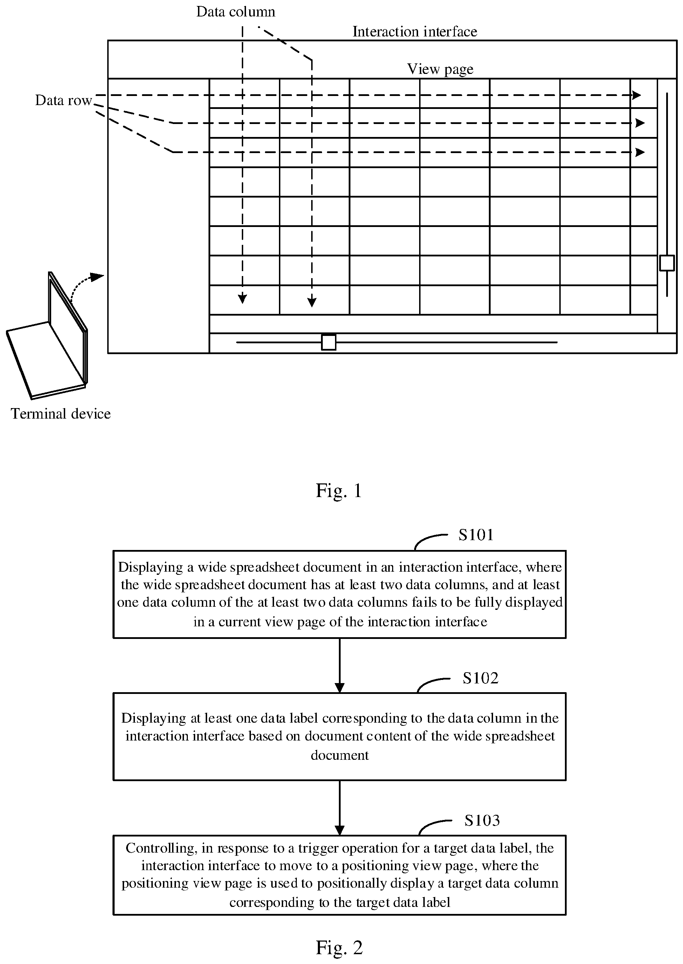

Fig. 1 is an application scenario diagram of an interaction method for a spreadsheet document provided by an embodiment of the present disclosure. The interaction method for the spreadsheet document provided by the embodiment of the present disclosure may be applied to an application with a function of displaying the spreadsheet document, and more specifically, to an application scenario of displaying and editing a wide spreadsheet document. The execution body of this embodiment may be a terminal device running the above application with the function of displaying the spreadsheet document, a server deploying a server terminal corresponding to the above application, or other electronic devices with similar functions. Referring to Fig. 1, taking the terminal device as an example, the terminal device loads a spreadsheet document online or offline after running the above application (specifically, for example, spreadsheet software) with functions of displaying and editing the spreadsheet document, and displays it in an interaction interface of the application. After that, the user may view and further edit the spreadsheet document through the interaction interface.

As shown in Fig. 1, the spreadsheet document usually includes multiple data rows and multiple data columns, each data row corresponds to one data object, and each data column is used to record object content corresponding to the data object. In the interaction process for the above spreadsheet document, when there are too many data rows in the spreadsheet document to be fully displayed on one view page, the user needs to switch the current view page of the interaction interface by turning up and down (for example, dragging a scroll bar), so as to display data objects located outside the current view page. When there are too many data columns in the spreadsheet document to be fully displayed on one view page, the user needs to switch the current view page of the interaction interface by turning left and right, so as to display object content located outside the current view page.

However, in the actual application process, since the arrangement of data rows is usually implemented based on one content dimension, for example, based on "user name", "object ID", etc., the data rows are sorted in an orderly manner, so even in the case where the number of data rows is relatively large, it is relatively easy to locate the data rows; while the data columns usually correspond to an independent data content dimension, for example, the object content recorded in data column #1 is "time", and the object content recorded in data column #2 is "place". Each of the data columns is independent and has no sequential relationship. In the process of locating a certain data column of the wide spreadsheet document, the user needs to manually operate the interaction interface to move the view horizontally for many times and observe the content of the view. Therefore, since the content dimensions corresponding to the data columns of the wide spreadsheet document are independent, and multiple data columns cannot be displayed on the same view page, it is necessary to perform a complex operation process of "operation-observation" for many times, so as to realize the location of the target data column of interest, which causes the problem of low interaction efficiency for the wide spreadsheet document.

An embodiment of the present disclosure provides an interaction method for a spreadsheet document to solve the above problem.

Referring to Fig. 2, Fig. 2 is a first flowchart of an interaction method for a spreadsheet document provided by an embodiment of the present disclosure. The method of this embodiment may be applied to a terminal device, and the interaction method for the spreadsheet document includes the following steps.

Step S101: displaying a wide spreadsheet document in an interaction interface, where the wide spreadsheet document has at least two data columns, and at least one data column of the at least two data columns fails to be fully displayed in a current view page of the interaction interface.

Step S102: displaying at least one data label corresponding to the data column in the interaction interface based on document content of the wide spreadsheet document.

Exemplarily, referring to the schematic diagram of the application scenario shown in Fig. 1, after running an application (such as spreadsheet software) with a function of displaying a spreadsheet document, the terminal device displays the wide spreadsheet document by using an interaction interface of the application. Specifically, first, through a document loading interface of the application, a spreadsheet file stored locally or in the cloud of the terminal device is selected and loaded into the terminal device. The terminal device parses data in the spreadsheet file, and generates the wide spreadsheet document based on a table style parameter or a table template and displays the wide spreadsheet document in the interaction interface. The table style parameter or the table template may be preset in the terminal device (application), and based on the table style parameter or the table template, the appearance style settings of the above wide spreadsheet document may be realized, such as setting table line width, row height, column width, etc. The specific implementation may be set according to the needs, and will not be repeated here.

Further, combined with the introduction of the previous part, the wide spreadsheet document is a spreadsheet document with a special table structure, and the wide spreadsheet document has multiple data rows for recording object contents of a data object corresponding to the multiple data row in an independent content dimension. For example, the data object corresponding to the data row is a "user identifier", and a data column corresponding to each "user identifier" is used to record object content in an independent content dimension corresponding to the "user identifier", the object content including, for example, "creation time", "request content", "permission level", and the like. The above object contents such as "creation time", "request content", "permission level" and the like correspond to independent content dimensions. At the same time, at least one data column of the at least two data columns fails to be fully displayed in the current view page of the interaction interface. For such a wide spreadsheet document, it is necessary to move the view page horizontally to view the content.

After that, the terminal device displays the data label corresponding to the data column based on the document content of the wide spreadsheet document. In a possible implementation, after completing displaying the document content of the spreadsheet document, the terminal device may display the data labels corresponding to the data columns based on a user's trigger instruction, for example, after clicking a specific trigger button. In another possible implementation, after completing displaying the document content of the spreadsheet document, the terminal device may synchronously display the data labels corresponding to the data columns, which may be specifically set based on requirements. The correspondence between the data labels and the data columns may be realized in a manner that a column header of the data column is the same as the data label. That is, visually, after displaying the wide spreadsheet document, the terminal device displays the column header of each data column in the wide spreadsheet document in the interaction interface, so as to realize the quick positioning of each data column. More specifically, the column header may be a header corresponding to each data column, or attribute information bound to the data column, which is recorded in the wide spreadsheet document and acquired when the wide spreadsheet document is loaded.

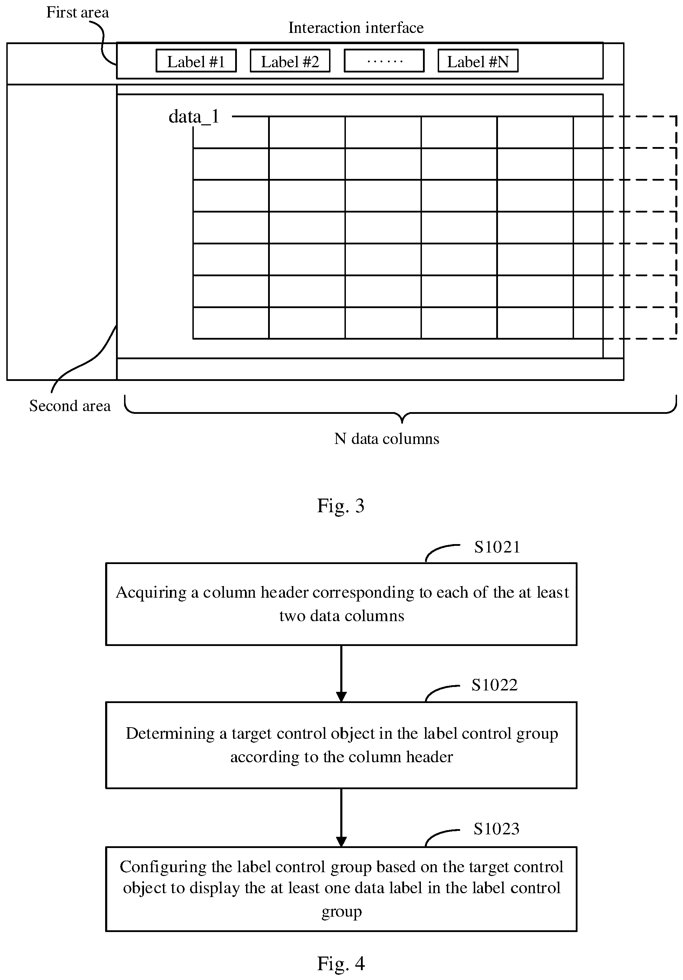

Fig. 3 is a schematic diagram of a data label provided by an embodiment of the present disclosure. As shown in Fig. 3, a wide spreadsheet document data_1 containing N data columns is displayed in a first area of the interaction interface of the terminal device. At the same time, after loading the spreadsheet document data_1, the terminal device displays N data labels (shown as label #1, label #2 to label #N in the figure) in a second area of the interaction interface, where each data label corresponds to one data column, and label content of each data label may be a column header of the data column.

Further, in a possible implementation, the above data label is implemented based on a label control group. The label control group is set at a specified position of the interaction interface, such as the second area in the embodiment shown in Fig. 3. The label control group may be a control set that integrates multiple trigger controls, or a control container that carries the trigger controls. The display state of the trigger controls integrated in the label control group may be set through the label control group, specifically, for example, display and hiding of the trigger controls, display position of the trigger controls, display style of the trigger controls, and the like.

Correspondingly, in a possible implementation, as shown in Fig. 4, a specific implementation of step S102 includes the following steps.

Step S1021: acquiring a column header corresponding to each of the at least two data columns.

Step S1022: determining a target control object in a label control group according to the column header.

Step S1023: configuring the label control group based on the target control object to display the data label in the label control group.

Exemplarily, first, in a possible implementation, after loading the wide spreadsheet document, the terminal device directly acquires a preconfigured column header corresponding to each data column, the column header is static information pre-stored in the wide spreadsheet document, and the implementation will not be repeated. After that, the target control object in the label control group is determined according to the column header. Specifically, for example, a corresponding number of trigger control objects are created based on the number of column headers, and each trigger control object is mapped to a corresponding data column to generate the target control object. Further, a corresponding positioning anchor may be set for the data column in the interaction interface, and then the target control object is associated with the positioning anchor, so that after the target control object is triggered, the view page of the interaction interface is moved horizontally to the position of the positioning anchor, thereby realizing the positioning of the data column.

A control name of each target control object is set as the corresponding column header, so that it is displayed as the data label. Finally, the label control group is configured by using the target control object generated above, so as to display the target control object in the label control group. The control name of the target control object is the column header, thereby realizing the display of the data label (column header) corresponding to each data column.

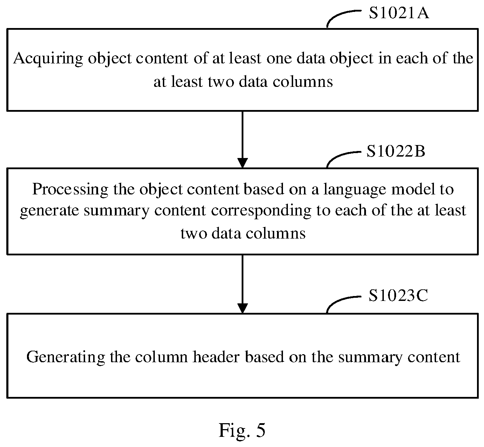

Further, in another possible implementation, when the wide spreadsheet document does not contain a preconfigured column header, the column header is dynamically generated according to data content of each data column, and then the data label is generated and displayed. Exemplarily, as shown in Fig. 5, a specific implementation of step S1021 includes the following steps.

Step S1021A: acquiring object content of at least one data object in each of the at least two data columns.

Step S1021B: processing the object content based on a language model to generate summary content corresponding to each of the at least two data columns.

Step S1021C: generating the column header based on the summary content.

Exemplarily, after loading the wide spreadsheet document, the terminal device first acquires object content of at least one data object in each of the data columns. Specifically, since the data object is recorded based on the data row, the terminal device acquires, for example, data of the first three rows of the loaded wide spreadsheet document, that is, three data objects. After that, content extraction is performed for each of the data columns of the three data objects to obtain the object content. For example, data column A corresponds to three pieces of object content (of the data object), which are content A_1, content A_2, and content A_3, respectively. After that, a large language model (LLM) is used to understand and summarize the content, to generate corresponding summary content A_summary, which is then used as the column header of data column A. Similarly, data column B also corresponds to three pieces of object content. Based on the large language model and the three pieces of object content corresponding to data column B, the column header of data column B, that is, the summary content B_summary, is obtained, which will not be repeated.

Further, in the above process of generating the summary content (step S1021B), the object content corresponding to each of the data columns may be formed into a content group in units of groups (for example, one content group includes the content A_1, content A_2, and content A_3 in the previous ) and sent to the language model in the form of the content group for processing at the same time. Correspondingly, the language model processes the content groups corresponding to each of the data columns, and generates the summary content corresponding to each of the data columns. In the steps of this embodiment, by sending the content groups to the language model for processing, the language model is enabled to refer to content correlation features of the content groups, so as to more accurately understand the meaning of the object content recorded in each of the data columns, thereby obtaining a more accurate column header, and improving the efficiency of subsequent positioning of the target data column.

Step S103: controlling, in response to a trigger operation for a target data label, the interaction interface to move to a positioning view page, where the positioning view page is used to positionally display a target data column corresponding to the target data label.

Exemplarily, after displaying the data label corresponding to the data column in the interaction interface, a mapping association between content and position is realized between the data label and the corresponding data column. After that, when the user applies the trigger operation for the target data label, the terminal device controls the interaction interface to move horizontally to the positioning view page corresponding to the target data label, thereby realizing the positioning of the target data column corresponding to the target data label. Specifically, for example, a positioning anchor of the target data column corresponding to the target data label is acquired, and the interaction interface is controlled to move to the positioning anchor to display the positioning view page. Specifically, for example, the leftmost first column or the rightmost first column of the positioning view page is the target data column, so that after the interaction interface moves to the positioning view page, the positioning view page may serve the purpose of positioning the target data column.

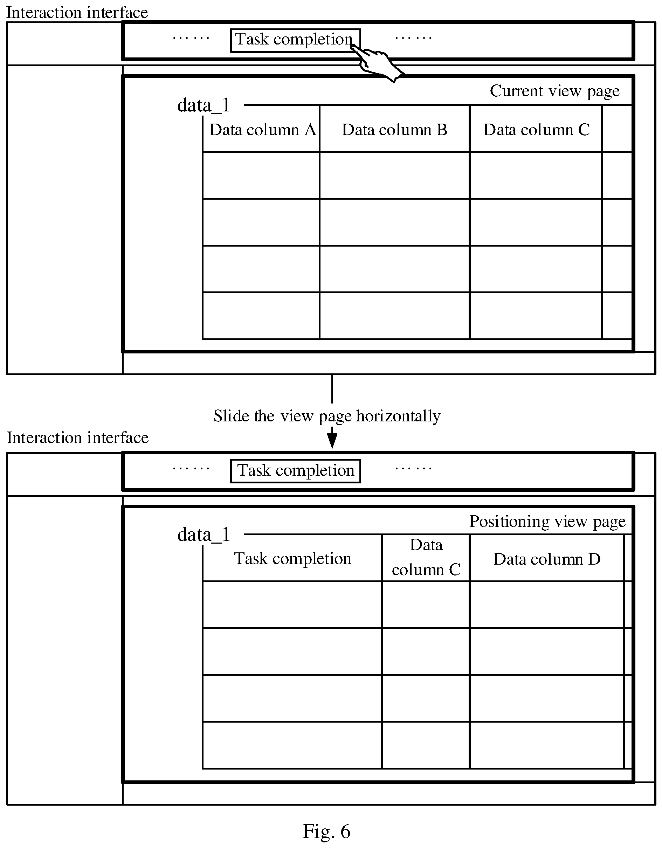

Fig. 6 is a schematic diagram of a process of positioning a target data column provided by an embodiment of the present disclosure. Referring to Fig. 6, exemplarily, first, in an initial state, a wide spreadsheet document is displayed in an interaction interface of a terminal device, and the wide spreadsheet document contains multiple data columns, where some of all the data columns are completely displayed in a current view page of the interaction interface. For example, as shown in the figure, column headers of the data columns displayed in the current view page are: data column A, data column B, and data column C. After that, the user clicks on data label #1 in the interaction interface, where a label name of the data label #1 is "task completion". After that, the terminal device controls the view page of the interaction interface to slide horizontally based on the trigger of the data label #1. As shown in the figure, after the view page of the interaction interface is slid to the positioning view page, the leftmost first column in the positioning view page is the target data column corresponding to the data label #1, and the column header of the target data column is: "task completion". The content of each row in the target data column is data related to the "task completion". At the same time, based on the original positional relationship between each of the data columns in the wide spreadsheet text, in the positioning view page, two other pages after the target data column are also displayed, and their column headers are: data column C and data column D, respectively.

In this embodiment, the wide spreadsheet document is displayed in the interaction interface, the wide spreadsheet document has at least two data columns, and at least one data column of the at least two data columns fails to be fully displayed in the current view page of the interaction interface. The data label corresponding to the data column is displayed in the interaction interface based on the document content of the wide spreadsheet document. The interaction interface is controlled to move to the positioning view page in response to the trigger operation for the target data label, the positioning view page is used to positionally display the target data column corresponding to the target data label. By displaying the data label corresponding to the data column according to the document content in the spreadsheet document while displaying the wide spreadsheet document, the data column is marked, and after responding to the trigger operation for the target data label, the current view page is moved to the corresponding positioning view page to position the target data column corresponding to the target data label. The quick positioning of the target data column is realized in the interaction scenario for the wide spreadsheet document containing multiple data columns, and the interaction efficiency for the wide spreadsheet is improved.

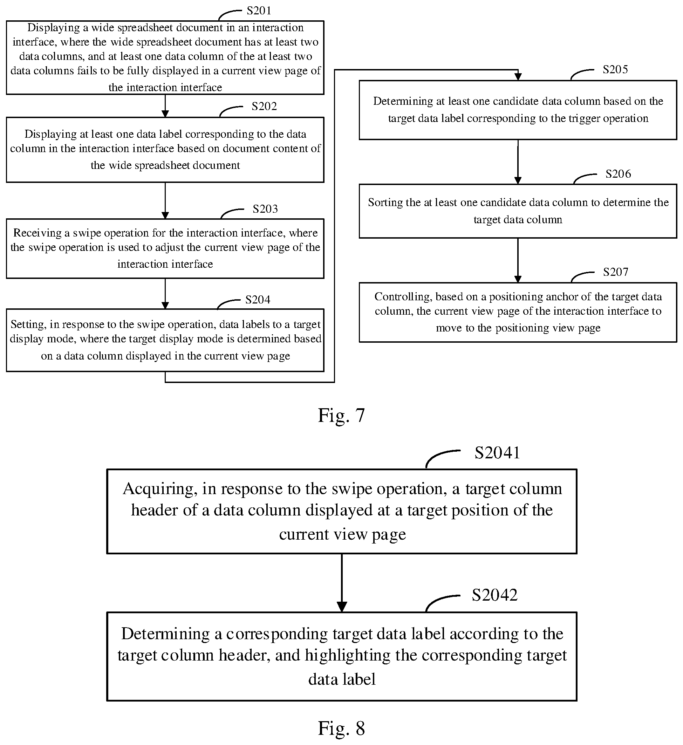

Referring to Fig. 7, Fig. 7 is a second flowchart of an interaction method for a spreadsheet document provided by an embodiment of the present disclosure. In this embodiment, on the basis of the embodiment shown in Fig. 2, step S103 is further detailed, and the step of interacting with the user is included. The interaction method for the spreadsheet document includes the following steps.

Step S201: displaying a wide spreadsheet document in an interaction interface, where the wide spreadsheet document has at least two data columns, and at least one data column of the at least two data columns fails to be fully displayed in a current view page of the interaction interface.

Step S202: displaying at least one data label corresponding to the data column in the interaction interface based on document content of the wide spreadsheet document.

Step S203: receiving a swipe operation for the interaction interface, where the swipe operation is used to adjust the current view page of the interaction interface.

Step S204: setting, in response to the swipe operation, data labels to a target display mode, where the target display mode is determined based on a data column displayed in the current view page.

Exemplarily, after displaying the data label in the interaction interface, the terminal device may further receive the swipe operation input by the user, where the swipe operation refers to an operation for adjusting the current view page of the interaction interface, for example, by swiping horizontally on a touch screen of the terminal device, the current view page of the interaction interface moves horizontally. After that, when the swipe operation changes the current view page of the interaction interface, the terminal device further adjusts the data label according to the content displayed in the changed current view page, that is, changes the display mode of the data label.

In a possible implementation, as shown in Fig. 8, a specific implementation of step S204 includes the following steps.

Step S2041: acquiring, in response to the swipe operation, a target column header of a data column displayed at a target position of the current view page.

Step S2042: determining a corresponding target data label according to the target column header, and highlighting the corresponding target data label.

Exemplarily, after the terminal device moves the current view page of the interaction interface in response to the swipe operation, a target position of the updated current view page is taken as an indicator point to determine the target data column. For example, a preset area on the leftmost side of the current view page is the target position, and data columns located in the preset area are the target data column. Correspondingly, a column header of the target data column is the target column header.

After that, a corresponding data label, that is, the target data label, is determined according to the target column header indicated by the target position of the current view page determined after the dynamic sliding. After that, the target data label is highlighted, for example, by underlining, bolding the font, adding shadows, etc., so as to realize the reverse influence of user operation on the data label.

Further, based on the introduction of the previous step, the target position of the current view page may have other implementation forms, for example, the target position of the current view page is the entire area of the current view page. In this implementation, the target column header determined by the target position of the current view page is the column header of all the data columns displayed in the current view page, so the content (column header) in the current view page can be quickly displayed by using the data label, and the purpose of quickly positioning the target data column through the data label is realized, and the overall efficiency of data column positioning is improved. Especially when the amount of data in the current view page is relatively large, the operation efficiency of the wide spreadsheet document is effectively improved.

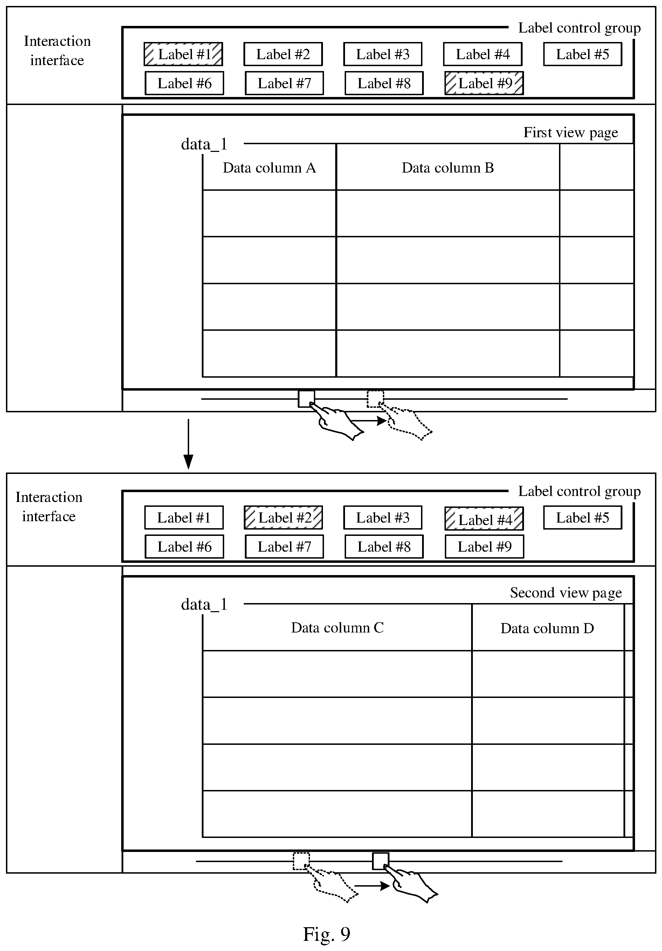

Fig. 9 is a schematic diagram of highlighting a data label provided by an embodiment of the present disclosure. As shown in Fig. 9, exemplarily, after loading a wide spreadsheet document, the terminal device displays data labels corresponding to respective data columns in the loaded wide spreadsheet document in a label control group of the interaction interface, for example, label #1 to label #9 located in the label control group in the figure. After that, the target position is preset to the entire area of the current view page. In the case where the interaction interface is located on the first view page, label #1 and label #9 are highlighted according to the data column (for example, including data column A and data column B) displayed in the target position of the first view page in the interaction interface. After that, the terminal device moves the current view page (the first view page) to the second view page in response to the user's swipe operation. In the case where the interaction interface is located on the second view page, label #2 and label #4 are highlighted according to the data column (for example, including data column C and data column D) displayed in the target position of the second view page in the interaction interface.

In this embodiment, by checking the content of the target position of the current view page, mapping to the corresponding target data label, and highlighting the target data label, the purpose of quickly identifying and displaying the content in the current view page by using the data label is realized, which is convenient for the subsequent quick positioning of the target data column by using the data label, and the overall efficiency of data column positioning is improved.

In another possible implementation, a specific implementation of step S204 includes the following steps.

Step S2043: acquiring, in response to the swipe operation, a column header of a target data column displayed in the current view page.

Step S2044: updating, based on the column header of the target data column, the data labels displayed in the interaction interface.

Exemplarily, in another possible implementation, the terminal device controls the current view page of the interaction interface to move in response to the swipe operation, so as to display the updated current view page. With the change of the current view page, the content displayed in the corresponding schematic diagram, that is, the data column, also changes accordingly. The specific process has been described in detail in the previous embodiment, and will not be repeated here. After that, the terminal device determines the corresponding target data column, that is, all the data columns displayed in the current view page, according to the content displayed on the current view page updated in response to the swipe operation. After that, the data label displayed in the interaction interface is dynamically updated according to the column header of the above target data column. Specifically, for example, in the case where the interaction interface is located on the first view page, according to all the data columns displayed in the first view page in the interaction interface, such as data column #1, data column #2, and data column #3, the corresponding data label A, data label B, and data label C are displayed. When the terminal device makes the interaction interface located on the second view page in response to the swipe operation, according to all the data columns displayed in the second view page in the interaction interface, such as data column #4 and data column #5, the corresponding data label D and data label E are displayed.

In this embodiment, by mapping to the corresponding data label according to the detected data column displayed in the current view page, the dynamic display of the data label is realized, thereby achieving the purpose of data filtering in a small range (within one view page), and further improving the operation efficiency and human-computer interaction efficiency of the wide spreadsheet document.

Step S205: determining at least one candidate data column based on the target data label corresponding to the trigger operation.

Step S206: sorting the at least one candidate data column to determine the target data column.

Exemplarily, in the case of wide spreadsheet data, in a possible case, in the case where there are too many data columns and the column headers have a common identification, one data label may correspond to multiple data columns, so as to improve the positioning efficiency. For example, the wide spreadsheet document includes 1000 data columns. In this case, it is impossible to correspondingly set an independent data label for each data column, or it is impossible to fully display all data labels in the interaction interface, thus causing loss of operation efficiency. In this case, according to the column headers of the data columns, multiple different column headers with the common identification are mapped to the same data label. For example, the wide spreadsheet document includes three data columns, and their column headers are Info_1, Info_2, and Info_3, respectively. Then, their common identification "Info" is mapped to one data label, and accordingly, when the data label is displayed in the interaction interface, the common identification "Info" is displayed as the data label. The data label corresponds to three candidate data columns, namely, the above-mentioned Info_1, Info_2, and Info_3.

Based on the above process of generating the data label, after the terminal device triggers the target data label based on the common identification in response to a trigger operation, it determines at least one candidate data column (for example, the above-mentioned Info_1, Info_2, and Info_3). After that, the above candidate data columns are sorted to determine the target data column. In a possible implementation, for example, the candidate data columns are sorted according to positioning anchors of the candidate data columns, and the candidate data column corresponding to the anchor position closest to the current view page is determined as the target data column, which is then positioned for.

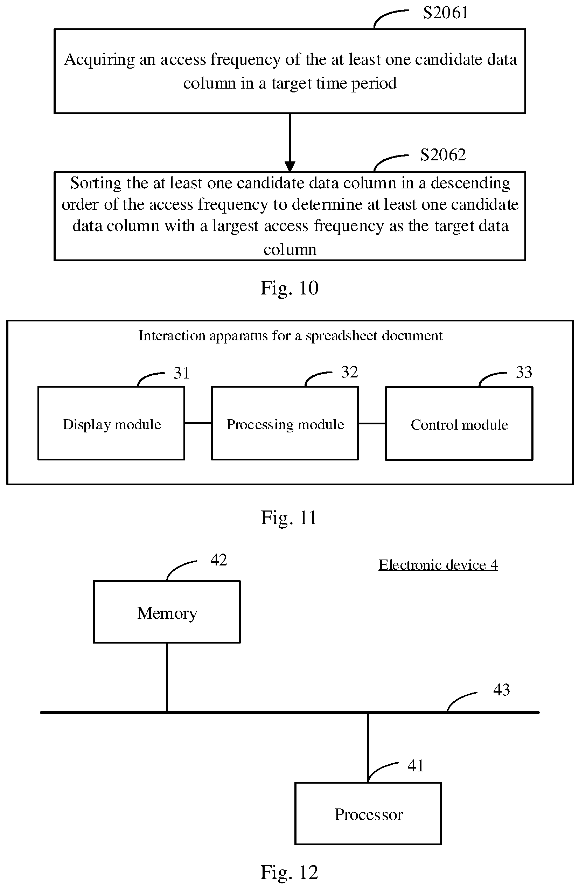

In a possible implementation, as shown in Fig. 10, a specific implementation of step S206 includes the following steps.

Step S2061: acquiring an access frequency of the at least one candidate data column in a target time period.

Step S2062: sorting the at least one candidate data column in a descending order of the access frequency to determine at least one candidate data column with a largest access frequency as the target data column.

Exemplarily, after determining the candidate data columns, the access frequency of each of the candidate data columns in the target time period is acquired. Furthermore, each time after receiving the trigger operation for the target data label and obtaining the candidate data columns, the terminal device generates the access frequency corresponding to the candidate data columns based on the user's further access to the above candidate data columns. The above access includes but is not limited to: viewing, saving, copying, modifying, etc. the data column. The access frequency is stored in the wide spreadsheet document, and the terminal device acquires the above access frequency in the process of loading the wide spreadsheet document. The target time period is a preset value, such as one week, one hour, etc., which may be specifically set as needed.

After that, the terminal device sorts the candidate data columns in a descending order of the access frequency, and determines one or more candidate data columns with the largest access frequency as the target data column. In this way, the data columns are sorted based on the historical access frequency, so that the frequently accessed data columns are positioned earlier, thereby improving the overall operation efficiency of the wide spreadsheet document.

Step S207: controlling, based on a positioning anchor of the target data column, the current view page of the interaction interface to move to the positioning view page.

Exemplarily, after the target data column is determined, the view page is moved based on the positioning anchor of the target data column, and the current view page of the interaction interface may be controlled to move to the positioning view page. The concept of the positioning anchor and the implementation of using the positioning anchor to move as shown in the schematic diagram have been introduced in the previous embodiment, and will not be repeated.

When there are multiple target data columns, for example, in the embodiment of step S206, when multiple target data columns are determined based on the access frequency, the interaction interface is controlled to move from the current view page to the corresponding positioning view page in sequence based on the positioning anchor of each of the target data columns. For example, the target data columns include data column #1, data column #2, and data column #3. Then, each time the terminal device receives a trigger operation, the view page is moved horizontally in sequence, and the positioning view page corresponding to data column #1, the positioning view page corresponding to data column #2, and the positioning view page corresponding to data column #3 are moved to in sequence. In this way, multi-round positioning of the data column is realized, and the efficient positioning and retrieval in the case of a large number of data columns in the wide spreadsheet document are further improved.

In this embodiment, the implementations of steps S201 to S202 are the same as the implementations of steps S101 to S102 in the embodiment shown in Fig. 2 of the present disclosure, which will not be repeated here.

Corresponding to the interaction method for the spreadsheet document in the above embodiments, Fig. 11 is a structural block diagram of an interaction apparatus for a spreadsheet document provided by an embodiment of the present disclosure. For convenience of explanation, only parts related to the embodiments of the present disclosure are shown. Referring to Fig. 11, the interaction apparatus 3 for the spreadsheet document includes:
a display module 31, configured to display a wide spreadsheet document in an interaction interface, where the wide spreadsheet document has at least two data columns, and at least one data column of the at least two data columns fails to be fully displayed in a current view page of the interaction interface;
a processing module 32, configured to display at least one data label corresponding to the data column in the interaction interface based on document content of the wide spreadsheet document; and
a control module 33, configured to control, in response to a trigger operation for a target data label, the interaction interface to move to a positioning view page, where the positioning view page is used to positionally display a target data column corresponding to the target data label.

According to one or more embodiments of the present disclosure, a label control group is set in the interaction interface, and the processing module 32 is further configured to: acquire a column header corresponding to each of the at least two data columns; determine a target control object in the label control group according to the column header; and configure the label control group based on the target control object to display the at least one data label in the label control group.

According to one or more embodiments of the present disclosure, when acquiring the column header corresponding to each of the at least two data columns, the processing module 32 is further configured to: acquire object content of at least one data object in each of the at least two data columns; process the object content based on a language model to generate summary content corresponding to each of the at least two data columns; and generate the column header based on the summary content.

According to one or more embodiments of the present disclosure, the control module 33 is further configured to: receive a swipe operation for the interaction interface, where the swipe operation is used to adjust the current view page of the interaction interface; and set, in response to the swipe operation, data labels to a target display mode, where the target display mode is determined based on a data column displayed in the current view page.

According to one or more embodiments of the present disclosure, when setting, in response to the swipe operation, data labels to the target display mode, the control module 33 is further configured to: acquire, in response to the swipe operation, a target column header of a data column displayed at a target position of the current view page; and determine a corresponding target data label according to the target column header and highlight the target data label.

According to one or more embodiments of the present disclosure, when setting, in response to the swipe operation, data labels to the target display mode, the control module 33 is further configured to: acquire, in response to the swipe operation, a column header of a target data column displayed in the current view page; and update, based on the column header of the target data column, the data labels displayed in the interaction interface.

According to one or more embodiments of the present disclosure, the control module 33 is further configured to: determine at least one candidate data column based on the target data label corresponding to the trigger operation; sort the at least one candidate data column to determine the target data column; and control, based on a positioning anchor of the target data column, the current view page of the interaction interface to move to the positioning view page.

According to one or more embodiments of the present disclosure, the processing module 32 is further configured to: set a corresponding positioning anchor for the data column in the interaction interface. When controlling, based on the positioning anchor of the target data column, the current view page of the interaction interface to move to the positioning view page, the control module 33 is further configured to: acquire the positioning anchor of the target data column; and control the interaction interface to move to the positioning anchor to display the positioning view page.

According to one or more embodiments of the present disclosure, when sorting the at least one candidate data column to determine the target data column, the control module 33 is further configured to: acquire an access frequency of the at least one candidate data column in a target time period; and sort the at least one candidate data column in a descending order of the access frequency to determine at least one candidate data column with a largest access frequency as the target data column.

The display module 31, the processing module 32, and the control module 33 are connected in sequence. The interaction apparatus 3 for the spreadsheet document provided in this embodiment may perform the technical solutions of the above method embodiments, and has implementation principles and technical effects similar to those of the method embodiments, which will not be repeated here in this embodiment.

Fig. 12 is a structural schematic diagram of an electronic device provided by an embodiment of the present disclosure. As shown in Fig. 12, the electronic device 4 includes:
a processor 41, and a memory 42 communicatively connected to the processor 41;
where the memory 42 stores a computer-executable instruction; and
the processor 41 executes the computer-executable instruction stored in the memory 42 to implement the interaction method for the spreadsheet document in the embodiments shown in Fig. 2 to Fig. 10.

Optionally, the processor 41 and the memory 42 are connected through a bus 43.

The relevant description may be understood by referring to the relevant description and effects corresponding to the steps in the embodiments corresponding to Fig. 2 to Fig. 10, and details are not repeated here.

An embodiment of the present disclosure provides a computer-readable storage medium, where a computer-executable instruction is stored in the computer-readable storage medium, and when the computer-executable instruction is executed by a processor, the interaction method for the spreadsheet document provided by any one of the embodiments corresponding to Fig. 2 to Fig. 10 of the present disclosure is implemented.

An embodiment of the present disclosure provides a computer program product, including a computer program, where when the computer program is executed by a processor, the interaction method for the spreadsheet document provided by any one of the embodiments corresponding to Fig. 2 to Fig. 10 of the present disclosure is implemented.

In order to implement the above embodiments, an embodiment of the present disclosure further provides an electronic device.

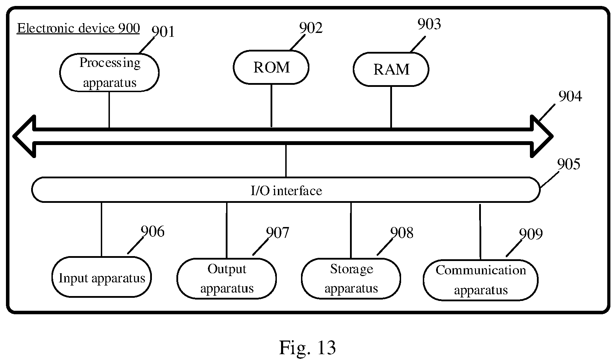

Referring to Fig. 13, it shows a structural schematic diagram of an electronic device 900 suitable for implementing the embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer, a portable media player (PMP), a vehicle-mounted terminal (such as a vehicle navigation terminal), etc., and a fixed terminal such as a digital TV, a desktop computer, etc. The electronic device shown in Fig. 13 is only an example, and should not impose any limitation on the function and scope of use of the embodiments of the present disclosure.

As shown in Fig. 13, the electronic device 900 may include a processing apparatus (such as a central processing unit, a graphics processor, etc.) 901, which may perform various appropriate actions and processing according to a program stored in a read-only memory (ROM) 902 or a program loaded from a storage apparatus 908 into a random access memory (RAM) 903. In the RAM 903, various programs and data necessary for the operation of the electronic device 900 are also stored. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 13 shows the electronic device 900 having various apparatuses, it should be understood that it is not required to implement or have all of the illustrated apparatuses. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a computer-readable medium, where the computer program contains program code for performing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the above functions defined in the method of the embodiment of the present disclosure are executed.

It should be noted that the above computer-readable medium in the present disclosure may be a computer-readable signal medium, a computer-readable storage medium, or any combination of the above two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier, and computer-readable program code is carried in the data signal. The data signal propagated in this way may adopt multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program code contained on the computer-readable medium may be transmitted by any suitable medium, including but not limited to: a wire, an optical cable, a radio frequency (RF), etc., or any suitable combination of the above.

The above computer-readable medium may be included in the above electronic device, or may exist alone without being assembled into the electronic device.

The above computer-readable medium carries one or more programs, and when the one or more programs are executed by the electronic device, the electronic device is caused to execute the method shown in the above embodiment.

The computer program code for performing the operations of the present disclosure may be written in one or more programming languages or a combination thereof, the above programming languages include object-oriented programming languages such as Java, Smalltalk, C++, and also include conventional procedural programming languages such as "C" language or similar programming languages. The program code may be executed entirely on a user's computer, partly on a user's computer, as a stand-alone software package, partly on a user's computer and partly on a remote computer, or entirely on a remote computer or server. In the case of involving a remote computer, the remote computer may be connected to a user's computer through any kind of network, including a local area network (LAN) or a wide area network (WAN), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the embodiments of the present disclosure may be implemented by software or hardware. The name of the unit does not constitute a limitation on the unit itself under certain circumstances, for example, the first acquisition unit may also be described as "a unit for acquiring at least two internet protocol addresses".

The functions described above may be performed at least partially by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD) and more.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In a first aspect, according to one or more embodiments of the present disclosure, an interaction method for a spreadsheet document is provided, including:
displaying a wide spreadsheet document in an interaction interface, where the wide spreadsheet document has at least two data columns, and at least one data column of the at least two data columns fails to be fully displayed in a current view page of the interaction interface; displaying at least one data label corresponding to the data column in the interaction interface based on document content of the wide spreadsheet document; and controlling, in response to a trigger operation for a target data label, the interaction interface to display a positioning view page, where the positioning view page is used to positionally display a target data column corresponding to the target data label.

According to one or more embodiments of the present disclosure, a label control group is set in the interaction interface, and the displaying at least one data label corresponding to the data column in the interaction interface based on document content of the wide spreadsheet document includes: acquiring a column header corresponding to each of the at least two data columns; determining a target control object in the label control group according to the column header; and configuring the label control group based on the target control object to display the at least one data label in the label control group.

According to one or more embodiments of the present disclosure, the acquiring the column header corresponding to each of the at least two data columns includes: acquiring object content of at least one data object in each of the at least two data columns; processing the object content based on a language model to generate summary content corresponding to each of the at least two data columns; and generating the column header based on the summary content.

According to one or more embodiments of the present disclosure, the method further includes: receiving a swipe operation for the interaction interface, where the swipe operation is used to adjust the current view page of the interaction interface; and setting, in response to the swipe operation, data labels to a target display mode, where the target display mode is determined based on a data column displayed in the current view page.

According to one or more embodiments of the present disclosure, the setting, in response to the swipe operation, data labels to the target display mode includes: acquiring, in response to the swipe operation, a target column header of a data column displayed at a target position of the current view page; and determining a corresponding target data label according to the target column header and highlighting the target data label.

According to one or more embodiments of the present disclosure, the setting, in response to the swipe operation, data labels to the target display mode includes: acquiring, in response to the swipe operation, a column header of a target data column displayed in the current view page; and updating, based on the column header of the target data column, the data labels displayed in the interaction interface.

According to one or more embodiments of the present disclosure, the controlling, in response to a trigger operation for a target data label, the interaction interface to display a positioning view page includes: determining at least one candidate data column based on the target data label corresponding to the trigger operation; sorting the at least one candidate data column to determine the target data column; and controlling, based on a positioning anchor of the target data column, a current view page of the interaction interface to move to the positioning view page.

According to one or more embodiments of the present disclosure, the method further includes: setting a corresponding positioning anchor for the data column in the interaction interface; and the controlling, based on the positioning anchor of the target data column, the current view page of the interaction interface to move to the positioning view page includes: acquiring the positioning anchor of the target data column; and controlling the interaction interface to move to the positioning anchor to display the positioning view page.

According to one or more embodiments of the present disclosure, the sorting the at least one candidate data column to determine the target data column includes: acquiring an access frequency of the at least one candidate data column in a target time period; and sorting the at least one candidate data column in a descending order of the access frequency to determine at least one candidate data column with a largest access frequency as the target data column.

In a second aspect, according to one or more embodiments of the present disclosure, an interaction apparatus for a spreadsheet document is provided, including:
a display module, configured to display a wide spreadsheet document in an interaction interface, where the wide spreadsheet document has at least two data columns, and at least one data column of the at least two data columns fails to be fully displayed in a current view page of the interaction interface;
a processing module, configured to display at least one data label corresponding to the data column in the interaction interface based on document content of the wide spreadsheet document; and
a control module, configured to control, in response to a trigger operation for a target data label, the interaction interface to display a positioning view page, where the positioning view page is used to positionally display a target data column corresponding to the target data label.

According to one or more embodiments of the present disclosure, a label control group is set in the interaction interface, and the processing module is further configured to: acquire a column header corresponding to each of the at least two data columns; determine a target control object in the label control group according to the column header; and configure the label control group based on the target control object to display the at least one data label in the label control group.

According to one or more embodiments of the present disclosure, when acquiring the column header corresponding to each of the at least two data columns, the processing module is further configured to: acquire object content of at least one data object in each of the at least two data columns; process the object content based on a language model to generate summary content corresponding to each of the at least two data columns; and generate the column header based on the summary content.

According to one or more embodiments of the present disclosure, the control module is further configured to: receive a swipe operation for the interaction interface, where the swipe operation is used to adjust the current view page of the interaction interface; and set, in response to the swipe operation, data labels to a target display mode, where the target display mode is determined based on a data column displayed in the current view page.

According to one or more embodiments of the present disclosure, when setting, in response to the swipe operation, data labels to the target display mode, the control module is further configured to: acquire, in response to the swipe operation, a target column header of a data column displayed at a target position of the current view page; and determine a corresponding target data label according to the target column header and highlight the target data label.

According to one or more embodiments of the present disclosure, when setting, in response to the swipe operation, data labels to the target display mode, the control module is further configured to: acquire, in response to the swipe operation, a column header of a target data column displayed in the current view page; and update, based on the column header of the target data column, the data labels displayed in the interaction interface.

According to one or more embodiments of the present disclosure, the control module is further configured to: determine at least one candidate data column based on the target data label corresponding to the trigger operation; sort the at least one candidate data column to determine the target data column; and control, based on a positioning anchor of the target data column, a current view page of the interaction interface to move to the positioning view page.

According to one or more embodiments of the present disclosure, the processing module is further configured to: set a corresponding positioning anchor for the data column in the interaction interface. When controlling, based on the positioning anchor of the target data column, the current view page of the interaction interface to move to the positioning view page, the control module is further configured to: acquire the positioning anchor of the target data column; and control the interaction interface to move to the positioning anchor to display the positioning view page.

According to one or more embodiments of the present disclosure, when sorting the at least one candidate data column to determine the target data column, the control module is further configured to: acquire an access frequency of the at least one candidate data column in a target time period; and sort the at least one candidate data column in a descending order of the access frequency to determine at least one candidate data column with a largest access frequency as the target data column.

In a third aspect, according to one or more embodiments of the present disclosure, an electronic device is provided, including: at least one processor and a memory;
where the memory stores a computer-executable instruction; and
the at least one processor executes the computer-executable instruction stored in the memory, to cause the at least one processor to execute the interaction method for the spreadsheet document according to the first aspect and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the interaction method for the spreadsheet document according to the first aspect and various possible designs of the first aspect is implemented.

In a fifth aspect, according to one or more embodiments of the present disclosure, a computer program product is provided, including a computer program, where when the computer program is executed by a processor, the interaction method for the spreadsheet document according to the first aspect and various possible designs of the first aspect is implemented.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, the above features and the technical features disclosed in the present disclosure (but not limited to) with similar functions may be replaced each other to form a technical solution.

Additionally, although the operations have been described in a particular order, this should not be understood as requiring the operations to be performed in the particular order shown or in a sequential order. Under certain circumstances, multitasking and parallel processing may be advantageous. Likewise, although several specific implementation details are included in the above discussion, these should not be interpreted as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in a language specific to structural features and/or logical actions of the method, it should be understood that the subject matter defined in the appended claims is not necessarily limited to the specific features or actions described above. Rather, the specific features and actions described above are merely exemplary forms of implementing the claims.

## Claims

1. An interaction method for a spreadsheet document, comprising:
displaying a wide spreadsheet document in an interaction interface, wherein the wide spreadsheet document has at least two data columns, and at least one data column of the at least two data columns fails to be fully displayed in a current view page of the interaction interface;
displaying at least one data label corresponding to the data column in the interaction interface based on document content of the wide spreadsheet document; and
controlling, in response to a trigger operation for a target data label, the interaction interface to display a positioning view page, wherein the positioning view page is used to positionally display a data column corresponding to the target data label.

2. The method of claim 1, wherein a label control group is set in the interaction interface, and the displaying at least one data label corresponding to the data column in the interaction interface based on document content of the wide spreadsheet document comprises:
acquiring a column header corresponding to each of the at least two data columns;
determining a target control object in the label control group according to the column header; and
configuring the label control group based on the target control object to display the at least one data label in the label control group.

3. The method of claim 2, wherein the acquiring the column header corresponding to each of the at least two data columns comprises:
acquiring object content of at least one data object in each of the at least two data columns;
processing the object content based on a language model to generate summary content corresponding to each of the at least two data columns; and
generating the column header based on the summary content.

4. The method of any of claims 1 to 3, further comprising:
receiving a swipe operation for the interaction interface, wherein the swipe operation changes the current view page of the interaction interface; and
setting, in response to the swipe operation, data labels to a target display mode, wherein the target display mode is determined based on a data column displayed in the current view page.

5. The method of claim 4, wherein the setting, in response to the swipe operation, data labels to the target display mode comprises:
acquiring, in response to the swipe operation, a target column header of a data column displayed at a target position of the current view page; and
determining a corresponding target data label according to the target column header and highlighting the corresponding target data label.

6. The method of claim 4, wherein the setting, in response to the swipe operation, data labels to the target display mode comprises:
acquiring, in response to the swipe operation, a column header of a target data column displayed in the current view page; and
updating, based on the column header of the target data column, the data labels displayed in the interaction interface.

7. The method of any of claims 1 to 6, wherein the controlling, in response to the trigger operation for the target data label, the interaction interface to display the positioning view page comprises:
determining at least one candidate data column based on the target data label corresponding to the trigger operation;
sorting the at least one candidate data column to determine a target data column; and
controlling, based on a positioning anchor of the target data column, the current view page of the interaction interface to move to the positioning view page.

8. The method of claim 7, further comprising:
setting a corresponding positioning anchor for the data column in the interaction interface;
wherein the controlling, based on the positioning anchor of the target data column, the current view page of the interaction interface to move to the positioning view page comprises:
acquiring the positioning anchor of the target data column; and
controlling the interaction interface to move to the positioning anchor to display the positioning view page.

9. The method of claim 7, wherein the sorting the at least one candidate data column to determine the target data column comprises:
acquiring an access frequency of the at least one candidate data column in a target time period; and
sorting the at least one candidate data column in a descending order of the access frequency to determine at least one candidate data column with a largest access frequency as the target data column.

10. An interaction apparatus for a spreadsheet document, comprising:
a display module, configured to display a wide spreadsheet document in an interaction interface, wherein the wide spreadsheet document has at least two data columns, and at least one data column of the at least two data columns fails to be fully displayed in a current view page of the interaction interface;
a processing module, configured to display at least one data label corresponding to the data column in the interaction interface based on document content of the wide spreadsheet document; and
a control module, configured to control, in response to a trigger operation for a target data label, the interaction interface to display a positioning view page, wherein the positioning view page is used to positionally display a data column corresponding to the target data label.

11. An electronic device, comprising: a processor and a memory;
wherein the memory stores a computer-executable instruction; and
the processor executes the computer-executable instruction stored in the memory, to cause the processor to execute the interaction method for the spreadsheet document of any of claims 1 to 9.

12. A computer-readable storage medium, wherein a computer-executable instruction is stored in the computer-readable storage medium, and when the computer-executable instruction is executed by a processor, the interaction method for the spreadsheet document of any of claims 1 to 9 is implemented.

13. A computer program product, comprising a computer program, wherein when the computer program is executed by a processor, the interaction method for the spreadsheet document of any of claims 1 to 9 is implemented.
